# EUROPEAN PATENT SPECIFICATION

(11) **EP 1 845 641 B1**
(45) Date of publication and mention of the grant of the patent: **29.09.2010**
(21) Application number: 06290635.9
(22) Date of filing: 12.04.2006
(51) Int. Cl.: H04B 10/158, H03M 13/41

(54) **Viterbi equalizer for signals with bit alternating modulation, optical receiver and transmission system comprising the same, as well as Viterbi equalization method**
Viterbi-Entzerrer für Signale mit Wechselbitmodulation, optischer Empfänger und dessen Übertragungssystem und Viterbi-Entzerrerverfahren
Egaliseur Viterbi pour signaux à modulation de bit alterne, récepteur optique et système de transmission le comprenant, et méthode d'égaliseur Viterbi

(43) Date of publication of application: 17.10.2007
(73) Proprietor: Alcatel Lucent, 75008 Paris (FR)
(72) Inventor: Buchali, Fred, 71336 Waiblingen (DE)
(74) Representative: Schmidt, Werner Karl

(56) References cited:
- EP-A1- 0 425 458
- US-B1- 6 732 328
- HERBERT DAWID ET AL: "A CMOS IC for Gb/s Viterbi Decoding: System Design and VLSI Implementation" IEEE TRANSACTIONS ON VERY LARGE SCALE INTEGRATION (VLSI) SYSTEMS, IEEE SERVICE CENTER, PISCATAWAY, NJ, US, vol. 4, no. 1, March 1996 (1996-03), XP011063227 ISSN: 1063-8210
- KANG I ET AL: "Implementations of alternate-polarisation differential-phase-shift-k eying transmission" ELECTRONICS LETTERS, IEE STEVENAGE, GB, vol. 40, no. 5, 4 March 2004 (2004-03-04), pages 333-335, XP006021600 ISSN: 0013-5194

## Description

### Background of the invention

The invention relates to a Viterbi equalizer for signals with bit alternating modulation, i.e. with alternating bit shape, to an optical receiver, and to a transmission system comprising such a receiver, as well as to a corresponding Viterbi equalization method.

New modulation formats for fiber-optic data transmission use multi-stage modulation. These modulation formats are used for modulating a property of the optical signal periodically with e.g. half of the bit-rate or another integer fraction thereof, leading to a change of the modulated physical property of the signal (modulation state) every bit or every second, third, ... bit. Such an add-on modulation using a clock signal with half the bit rate is used e.g. in the Carrier-Suppressed Return-to-Zero (CSRZ) format and the differential phase-shift keying (DPSK) modulation format to modulate the optical phase. In the alternating polarization multiplexing (APOL) format, the polarization state is switched after every bit between two possible states.

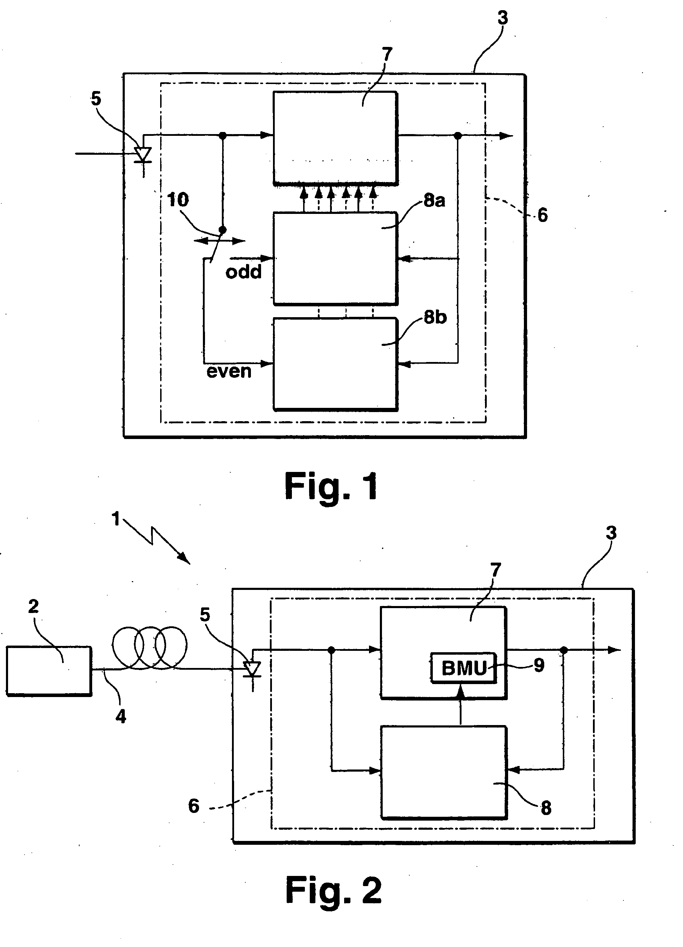

In these modulation formats, consecutive bits are not identical due to the format itself or due to imperfections of modulation or transmission. If the modulator bias of such a modulation is not at the optimum level, there is a difference of bit shape for odd and even bits. Furthermore, in the alternating polarization modulation format, even and odd bits are transmitted in different polarizations leading to a delay between both types of bits if the fiber exhibits polarization mode dispersion (PMD). Consequently, even and odd bits are different in magnitude or phase. However, Viterbi equalization commonly relies on one and the same shape of bits for all symbols, as will be explained below in connection with **Fig. 2****,** representing the state of the art.

Fig. 2 shows an optical transmission system **1** in which a transmitter **2** generates optical signals in an alternating bit modulation format. The optical signals are then transmitted via an optical fiber link **4** to a receiver **3.** The receiver 3 has a photodiode **5** at its input serving as an o/e-conversion means. The o/e-converted analog signal is fed to a Viterbi equalizer **6** which converts the analog bit sequence to a digital sequence of decided bits in a Viterbi core **7.** A number of subsequent decided bits (e.g. three or four) is collected in a shift register (not shown) at the output of the Viterbi core 7. Each of the possible states of the shift register defines a bit pattern (e.g. 000, 001, etc.), in the following also referred to as a symbol zᵢ (z₁=000, z₂=001, etc.), i=1, 2, ..., 8. The three-bit sequence zᵢ consists of two bits which define a state zᵢ(z₁ = 00, z₂ = 01, z₃ = 10, z₄ = 11), the third bit (0 resp. 1) corresponds to a transmitted (branch) bit and describes a transition between subsequent states, as will be described in greater detail below. In the following, the same term zᵢ will be used to designate symbols and states, the two of them being distinguished by the number of bits (i.e. z₁ = 00 designates a state (two bits), whereas z₁=000 designates a symbol (three bits)).

The decided bit sequence contained in the shift register is fed to a channel estimation unit **8** which generates a probability density function pdf(z₁), pdf(z₂), etc. for each symbol z₁, z₂, ... or determines other parameters to estimate the magnitude and variance of the analog values of each noisy channel symbol cᵢ at the entrance to the Viterbi core 7 (channel model). As an output of the channel estimation unit 8, a look-up table for the Viterbi core 3 is produced, which is used in a branch metric unit (BMU) **9** implemented in the latter to perform the selection of the optimum path.

In the standard Viterbi equalizer 3 of Fig. 2, all bit samples are analyzed in the same way, i.e. no distinction is made between even and odd bits, thus leading to a decrease of system performance when bit alternating modulation formats are used.

US 6 732 328 B1 discloses a two-stage sampling data detector for a partial response channel having a channel code encoder for encoding user information sequences into blocks of code words in accordance with a predetermined channel block code, wherein a list of most likely error-events comprises impermissible code words. The detector includes a first-stage detector, such as a Viterbi detector, connected to receive samples from the partial response channel and matched to characteristics of the channel and not to the channel code, puts out unchecked bit estimates. A second stage post-processor checks the bit estimates in relation to derived detector decision metrics information and the channel block code, and puts out post-processed bit estimates to a channel code decoder after correcting detected erroneous sequences in accordance with the decision metrics information, information derived from the channel code, and the list of most likely error-events. A method for generating the channel block code is also described.

EP 0425458A1 discloses a method and apparatus for adapting a Viterbi algorithm to a channel having varying transmission properties. The apparatus has a plurality of channel estimating circuits which are operated in parallel for calculating part impulse responses. The number of channel estimating circuits depends on time dispersion of the channel and the number of possible values of symbols.

This object is achieved by a Viterbi equalizer comprising a number of channel estimation units corresponding to the number of modulation states of the bit alternating modulation, the channel estimation units being operated in alternating order.

According to the invention, a differentiation between bits with different modulation states of a multi-stage modulation format is made. For the sake of simplicity, a modulation format with only two modulation states, referred to as odd and even bits, will be considered in the following. The even bits correspond e.g. to a first polarization state of an alternating polarization multiplexing (APOL) format, whereas the odd bits correspond to a second polarization state thereof.

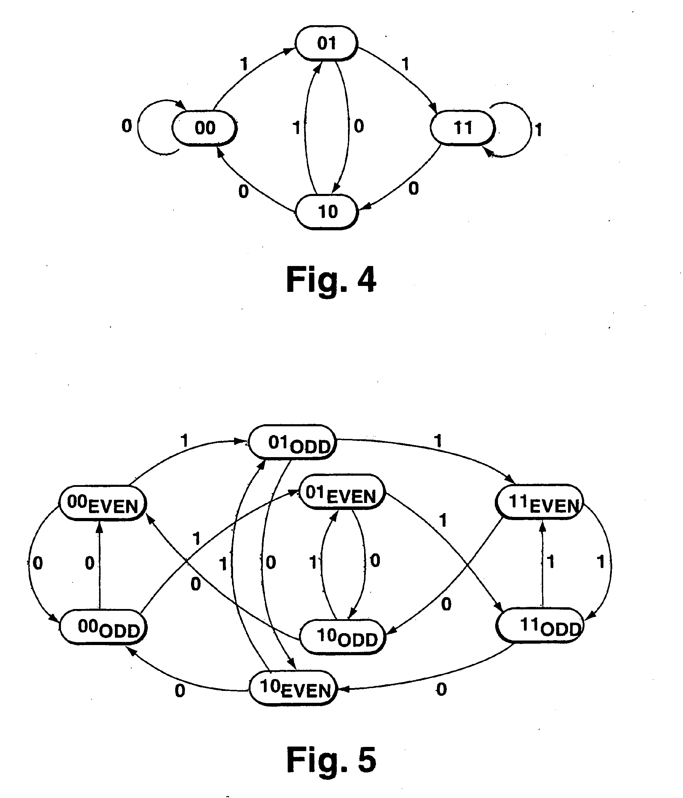

The state diagram of a standard Viterbi equalizer for four states z₁=00, z₂=01, z₃=10, z₄=11 is shown in **Fig. 4****.** In this state diagram, the different shape of odd and even bits for the two different polarization states is not taken into account. In contrast to this, **Fig. 5** shows a state diagram of a Viterbi equalizer according to the invention, wherein distinction is made between odd and even states, such that all states (an thus all corresponding symbols) are defined twice, namely as odd states Z_{1,odd}=00_{ODD,} Z_{2, odd}=01_{ODD}, Z_{3,odd}=10_{ODD,} Z_{4,odd}=11_{ODD} and even states Z_{1,even}=00_{EVEN,} Z_{2, even}=01_{EVEN,} Z_{3,even}=10_{EVEN,} Z_{4,even}=11_{EVEN.} The odd states are defined by an even bit (corresponding to the first polarization state) followed by an odd bit (corresponding to the second polarization state), whereas the even states are defined by an even bit following an odd bit. Consequently, transitions are only possible from even states to odd states and vice versa, such that the corresponding symbols are also defined twice, e.g. Z_{1,odd}= 000_{ODD}, Z_{1,even}=000_{EVEN} etc., the symbol Z_{1,odd} corresponding to a transition from the odd state z_{1,odd} = 00_{ODD} to the even state Z_{1,even} = 00_{EVEN}, whereas the symbol Z_{1,even} corresponds to a transition from the even state Z_{1,even} = 00_{EVEN} to the odd state Z_{1,odd}= 00_{ODD}.

For each type of symbol, i.e. even and odd, corresponding to a respective sample at the input of the Viterbi equalizer, a separate channel estimation unit is used, and both estimation units are used in alternating order. Thus, the difference between even and odd bits in magnitude or phase can be taken into account by the Viterbi equalizer according to the invention.

In contrast to this, a standard Viterbi equalizer uses only one channel estimation unit and is therefore not capable of distinguishing between alternately modulated bits, e.g., even and odd bits. Therefore, all bits are analyzed together, leading to the generation of a joint probability density function for all bits in one channel estimation unit, being a superposition of the probability density functions of the symbols defined for even and odd symbols, thus leading to a decrease of system performance.

In a preferred embodiment, the Viterbi equalizer further comprises a switching means for switching between the channel estimation units. The switching means may be a multiplexer which is driven with a clock signal corresponding to the bit rate or an integer fraction thereof, depending on the number of modulation states and the frequency of switching between the modulation states. For example, in the case of a CSRZ format with two modulation states corresponding to two different phases alternating with half the bit-rate, the clock signal of the switching means is also chosen to be half the bit-rate.

In a further preferred embodiment, the Viterbi equalizer further comprises a Viterbi core. The Viterbi core has at least one branch metric unit to which the output of the channel estimation units is supplied in alternating order. The branch metric unit(s) (BMU(s)) of the Viterbi core use the value of the sample to determine the logarithmic probabilities for all branches. In case that a serial implementation of the Viterbi equalizer is used, only one symbol is treated at a time in the Viterbi equalizer, and the branch metric unit(s) is/are supplied with alternating channel estimations for the even and odd symbols. In a parallel implementation of the Viterbi core, i.e. an implementation where a number of subsequent noisy samples (colleced in a block) is treated in parallel, the BMUs require alternating pdfs for the odd and even samples in case of an uneven block size.

In an alternative embodiment, the Viterbi equalizer comprises a Viterbi core with at least two branch metric units, wherein each branch metric unit is in operative connection with exactly one of the channel estimation units. In such an implementation, the connections between the BMUs and the channel estimation units can be realized with fixed hardware. This is possible e.g. when a parallel implementation of the Viterbi equalizer is put into operation, having an even block size when a bit alternating format uses two modulation states. In general, such an implementation can be achieved whenever the block size is an integer multiple of the number of modulation states of the bit alternating modulation, as the entire block is consumed in every clock cycle, such that the assignment of positions within the block to odd and even samples is maintained during the equalization. Such an approach is in particular possible when e.g. three different modulation states are used, although it may be more difficult to generate a clock signal for an uneven number of modulation states as compared to an even number of states.

In a further preferred embodiment, the Viterbi equalizer is implemented as a parallel equalizer. In a parallel equalizer, the assignment between even and odd samples and BMUs can be realized with fixed hardware, in particular when an even block size is used, as described above. Moreover, decoding speeds of 1 Gb/s and above are possible with such implementations.

In a highly preferred embodiment, the Viterbi equalizer, in particular the Vitebi core is implemented in VLSI technology. Such an implementation is e.g. advantageous when the so-called "Minimized Method" of Viterbi equalization is used, which will be discussed in greater detail below.

The invention is further realized in an optical receiver for signals with bit alternating modulation, comprising a Viterbi equalizer according to one or a combination of the embodiments described above. The receiver according to the invention has an increased performance compared to the state of the art when processing bit alternating modulation formats, thus leading to a reduction of the bit error ratio (BER).

The invention is also realized in an optical transmission system comprising a transmitter generating optical signals with bit alternating modulation, the transmission system comprising a receiver as described above. Bit alternating formats have certain desirable properties, e.g. reduced bandwidth and ISI, but the bit shape of transmitted signals may vary depending on the modulation state. These variations are taken into account at the receiver side in the Viterbi equalizer using different channel estimations, as described above.

The invention is further realized in a Viterbi equalization method for signals with bit alternating modulation, the method being characterized by the steps of: generating a separate channel estimation for each modulation state of the bit alternating modulation, and performing the Viterbi equalization using the channel estimations in alternating order. The inventive method uses a separate channel estimation for each modulation state by defining a separate set of symbols for each of these states. The channel estimations are then used in the Viterbi equalization in alternating order, preferably by generating a separate branch metric from each channel estimation. The branch metrics are supplied to corresponding branch metric units, thus allowing to make a distinction between different types of samples, such that transition probabilities which are different for each type of sample can be taken into account.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawing
- Fig. 1: shows an embodiment of a receiver according to the present invention with a Viterbi equalizer for a bit alternating modulation format,
- Fig. 2: shows an embodiment of a transmission system according to prior art,
- Fig. 3: shows a basic setup of a Viterbi core of Fig. 2 as a parallel implementation,
- Fig. 4: shows a state diagram with four states for a Viterbi equalizer according to prior art, and
- Fig. 5: shows a state diagram with eight states for a Viterbi equalizer according to the invention.

The following detailed description of the invention refers to the accompanying drawing. The same reference numerals may be used in different figures of the drawing to identify the same or similar elements.
**Fig. 1** shows a receiver 3 which replaces the receiver 3 in the transmission system 1 of Fig.2. The receiver 3 differs from the one described in Fig. 2 in that the single channel estimation unit 8 of the Viterbi equalizer 6 is replaced by a first and a second channel estimation unit 8a, 8b. Moreover, a switch 10 is provided in between the input to the Viterbi core 7 and the channel estimation units 8a, 8b for selecting either the first or the second one in alternating order. Alternatively, it is possible to split the received signal before or after the o/e-conversion and to separately perform an optical or electrical pre-processing for the even and the odd portion of the optical signal, respectively. When pre-processing is used, two detectors, e.g. photodiodes, may be used at the input of the receiver 3. The pre-processed portions of the signal are then fed to the first and second channel estimation unit 8a, 8b, respectively, in the way described above.

The signal at the input to the receiver 3 is a APOL signal, the polarization state of which is switched between two possible states at a frequency corresponding to the bit-rate. The switch 10 is driven with a corresponding clock signal at the half bit rate, thus dividing all the received samples into odd and even samples and providing them to the corresponding channel estimation unit 8a, 8b in alternating order. Note that the assignment to odd and even is arbitrary, as endless data streams are used in optical transmission systems (at least in theory).

It is understood that other bit alternating formats, e.g. the CSRZ or the DPSK modulation format, in which the phase of the signals is periodically modulated, may be treated with the Viterbi equalizer of Fig. 1 as well. For a skilled person, the modifications which are necessary for applying the above principle to modulation formats in which three or more modulation states are periodically alternated should be evident and is therefore not described in detail herein.

Each of the two channel estimation units 8a, 8b only processes samples which have the same ordering of polarization states (odd/even or even/odd, respectively), being referred to as odd and even samples in the following. The first channel estimation unit 8a generates probability density functions for the symbols corresponding to the odd samples, whereas the second channel estimation unit 8b generates probability density functions for the symbols corresponding to the even samples.

For calculating the best path through a trellis diagram of the Viterbi equalizer 3 of Fig. 1 having the state diagram of Fig. 5, a first branch metric is defined for transitions from the odd to the even states, and a second branch metric for transitions in the other direction, i.e. from even to odd. Therefore, when performing a Viterbi equalization with a serial Viterbi equalizer as in Fig. 1, the branch metric has to be switched at each transition from sample to sample. Consequently, the channel estimations for odd and even samples are fed to a branch metric unit (not shown) of the Viterbi core 7 in alternating order.

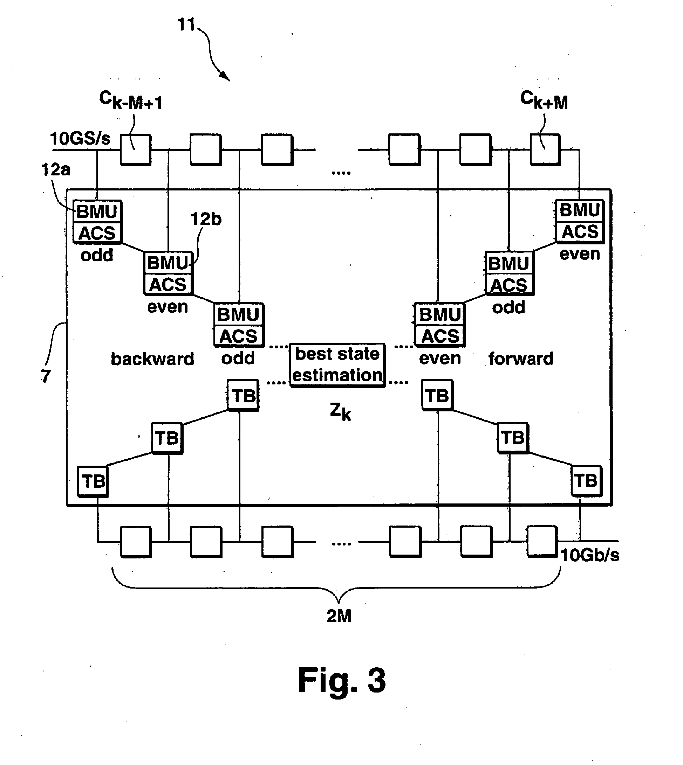

**Fig. 3** represents an alternative embodiment of the Viterbi core 7, showing the basic setup for the implementation of a parallelized Viterbi equalization. This setup corresponds essentially to a variant of the so-called "minimized method" of Viterbi equalization which is described in detail in the article "A CMOS IC for Gb/s Viterbi Decoding: System Design and VLSI implementation" by H. Dawid, G. Fettweis, and H. Meyr, in: IEEE transactions on very large scale integration (VLSI) systems, Vol. 4, No. 1, March 1996, p.17-31.

The setup described in Fig. 3 basically corresponds to a simplified setup of the one shown in Fig. 4 of the above-mentioned article. In this arrangement, subsequent data samples with a symbol rate of 10 GS/s are parallelized and fed to a shift register **11** with block size 2 **M,** where M designates the size of the transition matrix. M preferably corresponds to the survivor depth D of the Viterbi algorithm. The samples in the shift register are ordered with increasing sampling time k from left to right, the first sample **c_{k-M+1}** corresponding to sampling time k-M+1, the last sample **c_{k+M}** to sampling time k+M.

A best state **zₖ** at time instant k in the middle of the block is determined by performing an acquisition and a truncation process separately, starting from the samples at the left and right end of the block, i.e. c_{k-M+1} and c_{k+M}, in a forward and backward direction, respectively. By performing a series of add-compare-select (ACS) processes in corresponding **ACS** units, the best state **zₖ,** i.e. the state which is included in the overall best path from sampling time k - M to k + M is determined. The ACS units are supplied with the branch metrics from corresponding branch metric units **(BMUs).** In these branch metric units, the value of the sample is used to determine the logarithmic probabilities for all branches. Each clock cycle of the parallelized Viterbi algorithm which is carried through with a subrate of the bit rate, the data samples are shifted down by one step and one sample in each row in forward direction and one sample in backward direction is processed in the branch metric units and add compare select units. Finally, starting from the known best state Zₖ, a trace back algorithm is applied in corresponding trace back (**TB**) units from the middle of the block 11 to the left and to the right, thus reproducing the best path and determining the decided bits at the output of the Viterbi core 3.

The representation of the Viterbi core 7 of Fig. 3 is simplified in that for a realization of the parallel algorithm, a second series of add-compare-select (ACS) processes starting from the best state Zₖ in a forward and a backward direction, respectively, has to be performed. This process leads to the determination of the best state at the beginning of the block, i.e. Z_{k-M}, and is performed in the same way as described above.

The basic modification to the standard algorithm which is brought about by the invention is the application of branch metric units using channel estimations for odd or even bits. Thus, the BMUs **12a** in Fig. 3 which are designated by the term "odd" are connected to the first channel estimation unit 8a, whereas the "even" BMUs **12b** are connected to the second channel estimation unit 8b. Thus, the assignment between odd and even is realized with fixed hardware, which is possible as the width of the processing array is an even number in the embodiment of Fig. 3, as is the case in many applications. In serial algorithms or in processing arrays with uneven width, each BMU needs alternating pdf's, when two types of samples are used.

Of course, the invention is not limited to decoding signals with two modulation states as described above. For signals with e.g. three modulation states, it is possible to use an arrangement which is similar to the one described above, using three channel estimation units, each supplying one of three different types of BMU. In this case, the block size is an integer multiple of three in order to allow an implementation with fixed hardware. Furthermore, it is understood that the Viterbi equalizer 3 may also be used when signals which do not exhibit bit alternating modulation are used, both channel estimations being equal in this case, thus not leading to an improved performance.

The Viterbi core 3 and the channel estimation units 8a, 8b may be advantageously realized in VLSI technology, e.g. in one or several ASICs. Analog/digital conversion may be applied to the signal before entering the Viterbi core, such that the latter can be implemented entirely in one or several digital VLSI components. However, it may be advantageous to perform the decoding part (i.e. the add-compare select process) with an analog VLSI module, whereas the trace-back process of the best / survivor path is performed in a digital VLSI module.

To summarize, the Viterbi equalizer as described above and the corresponding Viterbi equalization method lead to an increase of performance of transmission systems for signals with bit alternating modulation by using more than one channel estimation, thus taking the variations of the properties of the transmitted bits due to the different modulation states into account.

## Claims

1. Viterbi equalizer (6) for optical signals with a bit alternating modulation format in which a physical property, in particular an optical phase or a polarization state, of the optical signal is modulated periodically with an integer fraction of the bit rate, the integer fraction defining the number of modulation states of the bit alternating modulation format,
**characterized by**
a plurality of channel estimation units (8a, 8b) corresponding to the number of modulation states of the bit alternating modulation format, the channel estimation units (8a, 8b) being operated in alternating order.

2. Viterbi equalizer according to claim 1, further comprising a switching means (10) for switching between the channel estimation units (8a, 8b).

3. Viterbi equalizer according to claim 1, further comprising a Viterbi core (7) having at least one branch metric unit (9), the output of the channel estimation units (8a, 8b) being supplied to the at least one branch metric unit (9) in alternating order.

4. Viterbi equalizer according to claim 1, further comprising a Viterbi core (7) with at least two branch metric units (12a, 12b), each branch metric unit (12a, 12b) in operative connection with exactly one of the channel estimation units (8a; 8b).

5. Viterbi equalizer (6) according to claim 1, implemented as a parallel equalizer.

6. Viterbi equalizer (6) according to claim 1, implemented in VLSI technology.

7. Optical receiver (3) for signals with bit alternating modulation, comprising a Viterbi equalizer according to claim 1.

8. Optical transmission system comprising a transmitter (2) generating optical signals with a bit alternating modulation format, **characterized by** a receiver (3) according to claim 7.

9. Viterbi equalization method for optical signals with a bit alternating modulation format in which a physical property, in particular an optical phase or a polarization state, of the optical signal is modulated periodically with an integer fraction of the bit rate, the integer fraction defining the number of modulation states of the bit alternating modulation format,
the method being **characterized by** the steps of:
- generating a separate channel estimation for each modulation state of the bit alternating modulation format, and
- performing the Viterbi equalization using the channel estimations in alternating order.

10. Method according to claim 9, comprising the further step of:
generating a separate branch metric from each channel estimation.

## Patentansprüche

1. Viterbi-Entzerrer (6) für optische Signale mit einem Wechselbitmodulationsformat, wobei eine physische Eigenschaft, insbesondere eine optische Phase oder ein Polarisationszustand, des optischen Signals periodisch mit einem ganzzahligen Teilwert der Bitrate moduliert wird, wobei der ganzzahlige Teilwert die Anzahl der Modulationszustände des Wechselbitmodulationsformats definiert,
**gekennzeichnet durch**
eine Mehrzahl von Kanalschätzungseinheiten (8a, 8b), welche der Anzahl der Modulationszustände des Wechselbitmodulationsformats entspricht, wobei die Kanalschätzungseinheiten (8a, 8b) in abwechselnder Reihenfolge betrieben werden.

2. Viterbi-Entzerrer nach Anspruch 1, weiterhin umfassend Schaltmittel (10) zum Schalten zwischen den Kanalschätzungseinheiten (8a, 8b).

3. Viterbi-Entzerrer nach Anspruch 1, weiterhin umfassend einen Viterbi-Kern (7) mit mindestens einer Zweigmetrik-Einheit (9), wobei der Ausgang der Kanalschätzungseinheiten (8a, 8b) in abwechselnder Reihenfolge an die mindestens eine Zweigmetrik-Einheit (9) bereitgestellt wird.

4. Viterbi-Entzerrer nach Anspruch 1, weiterhin umfassend einen Viterbi-Kern (7) mit mindestens zwei Zweigmetrik-Einheiten (12a, 12b), wobei jede Zweigmetrik-Einheit (12a, 12b) mit genau einer der Kanalschätzungseinheiten (8a; 8b) betriebsfähig verbunden ist.

5. Viterbi-Entzerrer (6) nach Anspruch 1, implementiert als Parallel-Entzerrer.

6. Viterbi-Entzerrer (6) nach Anspruch 1, implementiert in VLSI-Technologie.

7. Optischer Empfänger (3) für Signale mit Wechselbitmodulation, umfassend einen Viterbi-Entzerrer nach Anspruch 1.

8. Optisches Übertragungssystem mit einem Sender (2) für die Erzeugung von optischen Signalen mit einem Wechselbitmodulationsformat, **gekennzeichnet durch** einen Empfänger (3) nach Anspruch 7.

9. Viterbi-Entzerrungsverfahren für optische Signale mit einem Wechselbitmodulationsformat, wobei eine physische Eigenschaft, insbesondere eine optische Phase oder ein Polarisationszustand, des optischen Signals periodisch mit einem ganzzahligen Teilwert der Bitrate moduliert wird, wobei der ganzzahlige Teilwert die Anzahl der Modulationszustände des Wechselbitmodulationsformats definiert, wobei das Verfahren durch die folgenden Schritte gekennzeichnet ist:
- Erzeugen einer separaten Kanalschätzung für jeden Modulationszustand des Wechselbitmodulationsformats, und
- Ausführen der Viterbi-Entzerrung unter Verwendung der Kanalschätzungen in abwechselnder Reihenfolge.

10. Verfahren nach Anspruch 9, umfassend den weiteren Schritt des Erzeugens einer separaten Zweigmetrik aus jeder Kanalschätzung.

## Revendications

1. Égaliseur de Viterbi (6) pour des signaux optiques en format de modulation binaire alternée, dans lequel une propriété physique, en particulier une phase optique ou un état de polarisation, du signal optique, est modulée régulièrement avec une fraction d'entier du débit binaire, la fraction d'entier définissant le nombre d'états de modulation du format de modulation binaire alternée,
**caractérisé par**
une pluralité d'unités d'estimation de canal (8a, 8b) correspondant au nombre d'états de modulation du format de modulation binaire alternée, les unités d'estimation de canal (8a, 8b) fonctionnant en ordre alterné.

2. Égaliseur de Viterbi selon la revendication 1, comprenant en outre des moyens de commutation (10) pour une commutation entre les unités d'estimation de canal (8a, 8b).

3. Égaliseur de Viterbi selon la revendication 1, comprenant en outre un coeur de Viterbi (7) ayant au moins une unité d'indice de branche (9), la sortie des unités d'estimation de canal (8a, 8b) étant appliquée à la au moins une unité d'indice de branche (9) en ordre alterné.

4. Égaliseur de Viterbi selon la revendication 1, comprenant en outre un coeur de Viterbi (7) avec au moins deux unités d'indice de branche (12a, 12b), chaque unité d'indice de branche (12a, 12b) étant connectée en fonctionnement avec l'une exactement des unités d'estimation de canal (8a, 8b).

5. Égaliseur de Viterbi (6) selon la revendication 1, mis en oeuvre en tant qu'égaliseur parallèle.

6. Égaliseur de Viterbi (6) selon la revendication 1, mis en oeuvre selon la technologie VLSI.

7. Récepteur optique (3) pour des signaux avec modulation binaire alternée, comprenant un égaliseur de Viterbi selon la revendication 1.

8. Système de transmission optique comprenant un émetteur (2) générant des signaux optiques en format de modulation binaire alternée, **caractérisé par** un récepteur (3) selon la revendication 7.

9. Procédé d'égalisation de Viterbi pour des signaux optiques en format de modulation binaire alternée, dans lequel une propriété physique, en particulier une phase optique ou un état de polarisation, du signal optique, est modulée régulièrement avec une fraction d'entier du débit binaire, la fraction d'entier définissant le nombre d'états de modulation du format de modulation binaire alternée, le procédé étant **caractérisé par** les étapes suivantes :
- génération d'une estimation de canal séparée pour chaque état de modulation du format de modulation binaire alternée, et
- réalisation de l'égalisation de Viterbi au moyen des estimations de canal en ordre alterné.

10. Procédé selon la revendication 9, comprenant en outre l'étape suivante : génération d'un indice de branche séparé à partir de chaque estimation de canal.
